# EUROPÄISCHE PATENTANMELDUNG

(11) **EP 2 026 454 A1**
(43) Veröffentlichungstag der Anmeldung: **18.02.2009**
(21) Anmeldenummer: 07016217.7
(22) Anmeldetag: 17.08.2007
(51) Int. Cl.: H02M 7/06

(54) **Ein-Fehler-sichere Brückengleichrichtung**

(71) Anmelder: SIEMENS AKTIENGESELLSCHAFT, 80333 München (DE)
(72) Erfinder: Klamm, Arnold, 76870 Kandel (DE); Kort, Valentin, 76829 Landau (DE)

(57) **Zusammenfassung**

Die Erfindung betrifft einen (n-1)-sicheren Brückengleichrichter (1) mit mindestens zwei in Reihe geschalteten Dioden (D1,D2) auf jedem der Strompfade (P1,P2,P3,P4) zwischen einer Eingangs-Wechselspannung (AC) und einer Ausgangs-Gleichspannung, wobei jede der Dioden (D1,D2) zur Sperrung der vollen Eingangs-Wechselrichterspannung (AC) vorgesehen ist.

## Beschreibung

Die Erfindung betrifft einen Brückengleichrichter mit mindestens zwei in Reihe geschalteten Dioden in jedem Strompfad.

In AC-Netzteilen, die in explosionsgeschützten Bereichen, so genannten Ex-Bereichen verwendet werden sollen, muss sichergestellt werden, dass die Eingangs-Wechselspannung, die in eine Ausgangs-Gleichspannung gerichtet werden soll, derart gleichgerichtet wird, dass es im Fehlerfalle nicht zu einem unzulässig hohen Strom kommt. Als ein Fehler wird hierbei z.B. ein Kurzschluss über den Gleichrichter oder nach dem Gleichrichter angenommen.

Eine prinzipielle Lösungsmöglichkeit besteht darin, kritische Bauteile auf Übertemperatur zu überwachen und vor dem kritischen Bauteil eine AC-Netz-Trennung zu schalten. Hierbei sollte die AC-Netz-Trennung u.U. redundant ausgelegt sein. Dies führt dann jedoch zu aufwendigen Lösungen. Zudem ist im Ex-Bereich sicher zu stellen, dass im Fehlerfall auf der Eingangs-Wechselspannungsseite der Eingangsstrom stets auf einen sehr kleinen Maximalwert begrenzt wird. Dieser Maximalwert liegt in der Regel bei < 1mA.

Die Aufgabe der vorliegenden Erfindung besteht nun darin, einen Gleichrichter anzugeben, welcher auch im EIN-Fehler-Fall eine Strombegrenzung sicher gewährleistet.

Die Aufgabe wird erfindungsgemäß durch die Merkmale des Patentanspruchs 1 gelöst.

Erfindungsgemäß wird ein konventioneller Brückengleichrichter, welcher normalerweise über jeweils eine Diode zur Gleichrichtung der Halbwelle auf jedem Strompfad verfügt, derart erweitert, dass in jedem Strompfad eine zweite Diode eingebracht wird. Hierbei muss jede der verwendeten Dioden die volle Eingangs-Wechselspannung sperren können. Die Dioden werden hierbei erfindungsgemäß in Reihe geschaltet. Dies führt dazu, dass bei einem Kurzschluss einer der in Reihe geschalteten Dioden immer über die andere, dazu unmittelbar in Reihe geschaltete Diode, eine sichere Sperrung der negativen Halbwelle gewährleistet ist. Somit kann bei Auftritt eines Fehlers immer noch eine sichere Begrenzung der Stromstärke erfolgen.

Die erfindungsgemäße Lösung ist insbesondere im exgeschützten Bereich von Vorteil. Sie ist einfach zu realisieren und äußerst effizient. Die sichere Begrenzung der Stromstärke im Fehlerfall wird jedoch mit einer doppelten Verlustleistung der Schaltung gegenüber einem einfachen, konventionellen Brückengleichrichter erkauft.

Eine geforderte Eigenschaft im Ex-Schutzbereich ist, dass der AC-Eingangskreis im Fehlerfalle keine unzulässig hohen Ströme führen darf. In der Regel sind dies Ströme unter < 1mA. Eine passive Strombegrenzung würde zu hohe Verluste verursachen, falls sie überhaupt realisierbar wäre. Man bräuchte somit eine redundante AC-Kurzschlussstrombegrenzung, die sicherstellt, dass auch kurze Spitzenstromimpulse unter dem Maximalwert bleiben. Wenn diese Strombegrenzung in Reihe zu der AC-Einspeisung geschaltet wird, muss sie auch daraus versorgt werden, da eine Fremdversorgung noch viel aufwendiger wäre. Somit ist ein Versorgungsstrom für die Begrenzungsschaltung bei allen Eingangsspannungen (ca. 1-600 V) mit einem Limit von wenigen Mikro-Ampere zur Verfügung zu stellen. Die elektronische Strombegrenzung müsste mit kurzen Reaktionszeiten in redundanter Ausführung bereitgestellt werden. Eine derartige Realisierung einer Strombegrenzung als Alternative zu dem vorgeschlagenen Brückengleichrichter mit 8 Dioden wäre schwer zu realisieren.

Im Folgenden wird die Erfindung anhand der Figur näher beschrieben und erläutert.

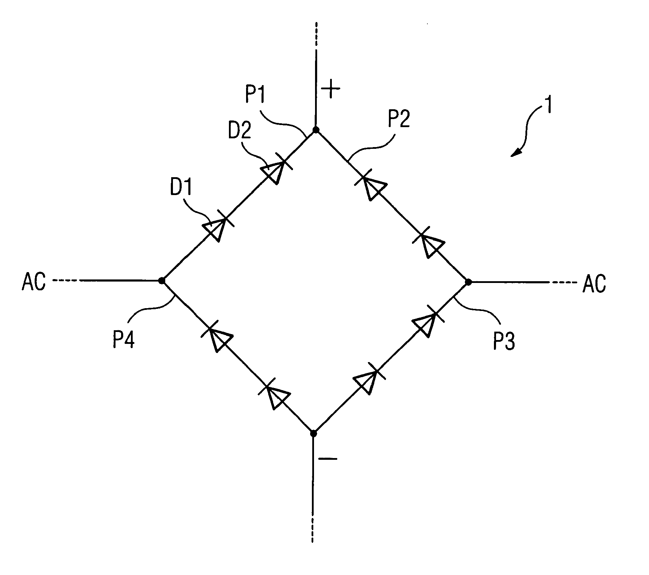

FIG 1 stellt einen Brückengleichrichter mit zwei Dioden D1,D2 in jedem Strompfad P1,P2,P3,P4 dar. Hierbei wird eine Eingangs-Wechselspannung AC durch den Brückengleichrichter in eine Gleichspannung umgeformt. Die positive Halbwelle der Wechselspannung wird jeweils durch die Dioden D1,D2 durchgelassen, während die negative Halbwelle der Wechselspannung durch die Dioden D1,D2 herausgefiltert wird. Um nun eine Ein-Fehlersicherheit zu gewährleisten, wird in jeden der Strompfade eine redundante Ausführung von Dioden D1,D2 eingebracht. Die Dioden D1,D2 sind hierbei in jedem der Strompfade in Reihe geschaltet. Sollte eine der Dioden D1,D2 kurzschließen, so kann die zweite in dem Strompfad angeordnete Diode, welche in Reihe geschaltet ist, immer noch eine sichere Sperrung der negativen Halbwelle gewährleisten. Hierdurch wird sichergestellt, dass keine unzulässig hohen Ströme entstehen.

## Patentansprüche

1. Brückengleichrichter (1) mit mindestens zwei in Reihe geschalteten Dioden (D1,D2) auf jedem der Strompfade (P1,P2,P3,P4) zwischen einer Eingangs-Wechselspannung (AC) und einer Ausgangs-Gleichspannung.

2. Brückengleichrichter nach Anspruch 1, wobei jede der Dioden (D1,D2) zur Sperrung der vollen Eingangs-Wechselspannung (AC) vorgesehen ist.

3. Brückengleichrichter nach Anspruch 1 oder 2, wobei der Gleichrichter (1) zur elektronischen Strombegrenzung im Fehlerfall, insbesondere bei einem Kurzschluss über oder nach dem Gleichrichter (1) vorgesehen ist.

4. Verwendung eines Brückengleichrichters gemäß einem der vorhergehenden Ansprüche zur Vermeidung eines unzulässig hohen Stroms im Fehlerfall in einem explosionsgeschützten Bereich.
